# EUROPEAN PATENT SPECIFICATION

(11) **EP 3 445 019 B1**
(45) Date of publication and mention of the grant of the patent: **23.09.2020**
(21) Application number: 17781911.7
(22) Date of filing: 13.04.2017
(51) Int. Cl.: H04L 29/08, H04W 4/46, H04W 4/40, H04W 4/44

(54) **VEHICLE-BASED COMMUNICATION METHOD AND SYSTEM**
VERFAHREN UND SYSTEM ZUR FAHRZEUGBASIERTEN KOMMUNIKATION
PROCÉDÉ ET SYSTÈME DE COMMUNICATION BASÉS SUR UN VÉHICULE

(30) Priority: 13.04.2016 CN 201610227510
(43) Date of publication of application: 20.02.2019
(73) Proprietor: Tencent Technology (Shenzhen) Company Limited, Shenzhen 518057 (CN)
(72) Inventor: WANG, Dafeng, Shenzhen, 518057 (CN)
(74) Representative: V.O.
(86) International application number: PCT/CN2017/080352
(87) International publication number: WO 2017/177935

(56) References cited:
- WO-A1-2013/026443
- WO-A2-2012/037166
- CN-A- 102 868 970
- CN-A- 105 430 039
- CN-Y- 201 267 003
- US-A1- 2015 312 353

## Description

### RELATED APPLICATION

This application claims priority to China Patent Application No. 201610227510.1, filed with the Chinese Patent Office on April 13, 2016 and entitled "VEHICLE-BASED COMMUNICATION METHOD, SYSTEM, AND APPARATUS".

### FIELD OF THE TECHNOLOGY

Embodiments of this application relate to the field of intelligent transportation, and in particular, to a vehicle-based communication method, and to a corresponding system.

### BACKGROUND OF THE DISCLOSURE

The development of economy brings about more automobiles on roads, and a vehicle owner may need to communicate with another vehicle owner due to various situations, for example, there is traffic congestion ahead or an object falls off from a vehicle ahead.

In the existing technology, when a vehicle owner of a latter vehicle needs to communicate with a vehicle owner of a former vehicle, the vehicle owner of the latter vehicle needs to have a contact method of the vehicle owner of the former vehicle, or communicate with the vehicle owner of the former vehicle face to face after attracting the attention of the vehicle owner of the former vehicle by means of whistling or the like.

In an implementation process of embodiments of the present invention, the inventor finds that the existing technology at least has the following problems:

If the vehicle owner of the latter vehicle does not have the contact method of the vehicle owner of the former vehicle, or the vehicle owner of the latter vehicle also cannot contact with the vehicle owner of the former vehicle by using another method, the vehicle owner of the latter vehicle cannot communicate with the vehicle owner of the former vehicle.

It is noted that patent publication WO 2012/037166 A2 discloses methods and systems for facilitating user interaction. One such method includes receiving, from a first user device, identification information associated with a targeted user and retrieving, from a database, contact information associated with the identification information. The method may further include providing the contact information to the first user device to facilitate communication between the first user device and a user device of the targeted user and/or providing a message to the user device of the targeted user.

It is noted that patent publication US 2015/0312353 A1 discloses a driver-to-driver communication system including a server accessible over a communications network, a first vehicle, and a second vehicle. The first vehicle and the second vehicle each have a license plate with a license plate number. The license plate numbers are stored on the server. The first vehicle may be substantially behind the second vehicle, and may be configured to send the second license plate number to the server. This may be accomplished by a computer device, which includes a camera to detect and read the second license plate number. A processor recognizes the second license plate number and sends it to the server over the communications network via a wireless module. The server matches the second license plate number with the second vehicle, and subsequently establishes communication, either direct or indirect, between the first vehicle and the second vehicle.

### SUMMARY

To resolve problems of the existing technology, a method and system are defined by the appended independent claims. Dependent claims constitute embodiments of the invention. The embodiments of the following description which are not covered by the appended claims are considered as not being part of the present invention.

The technical solutions provided in the embodiments of this application have the following beneficial effects:
The first communication device obtains the license plate information of the second vehicle and the device identifier of the first communication device, and sends the license plate information of the second vehicle and the device identifier of the first communication device to the server, and the server determines the communication account of the second communication device corresponding to the second vehicle according to the license plate information of the second vehicle, and sends the communication account of the second communication device to the first communication device. Because the server determines the communication account of the second communication device by using the license plate information of the second vehicle that is sent by the first communication device corresponding to the first vehicle, after receiving the communication account of the second communication device, the first communication device may communicate with the second communication device, avoiding a problem that because a vehicle owner of the first vehicle does not have a contact method of a vehicle owner of the second vehicle, the vehicle owner of the first vehicle cannot communicate with the vehicle owner of the second vehicle, and achieving an effect that the vehicle owner of the first vehicle can conveniently contact with the vehicle owner of the second vehicle, and communicate with the vehicle owner of the second vehicle.

### BRIEF DESCRIPTION OF THE DRAWINGS

To more clearly describe the technical solutions in the embodiments of this application, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 is a schematic diagram of an implementation environment of a vehicle-based communication method according to some exemplary embodiments;
FIG. 2 is a flowchart of a communication method according to an exemplary embodiment;
FIG. 3A is a flowchart of a communication method according to another exemplary embodiment;
FIG. 3B is a flowchart of a communication method according to another exemplary embodiment;
FIG. 4 is a flowchart of a communication method according to another exemplary embodiment;
FIG. 5 is a flowchart of a communication method according to another exemplary embodiment;
FIG. 6 is a flowchart of a communication method according to another exemplary embodiment;
FIG. 7 is a structural block diagram of a communication apparatus according to another exemplary embodiment;
FIG. 8 is a structural block diagram of a communication apparatus according to an exemplary embodiment;
FIG. 9 is a structural block diagram of a communication apparatus according to an exemplary embodiment; and
FIG. 10 is a schematic structural diagram of a communication apparatus according to an embodiment of this application.

### DESCRIPTION OF EMBODIMENTS

To make the objectives, technical solutions, and advantages of this application clearer, the following further describes implementations of this application in detail with reference to the accompanying drawings.

In an embodiment of this application, when a vehicle owner of a latter vehicle needs to communicate with a vehicle owner of a former vehicle, the vehicle owner of the latter vehicle needs to have a contact method of the vehicle owner of the former vehicle, or communicate with the vehicle owner of the former vehicle after attracting the attention of the vehicle owner of the former vehicle by means of whistling or the like.

If the vehicle owner of the latter vehicle dose not have the contact method of the vehicle owner of the former vehicle, or the vehicle owner of the latter vehicle also cannot contact with the vehicle owner of the former vehicle by using another method, the vehicle owner of the latter vehicle cannot communicate with the vehicle owner of the former vehicle.

In an embodiment of this application, if a communication needs to be performed among strangers based on vehicles, first, vehicle owners are generally strangers, and a vehicle owner of a first vehicle may not obtain a device identifier of a second communication device of a second vehicle. Even the device identifier of the second communication device is obtained, and a communication with the second communication device is established, a subsequent communication may not be needed at any time because the strangers do not communicate with each other all the way. If a communication between a first communication device and the second communication device needs to be established, a method that may be used by the existing technology is as follows: The vehicle owner of the first vehicle needs to manually obtain the device identifier of the second communication device of the second vehicle, for example, by means of scanning a code or manually recording, initiates, by using the communication device of the first vehicle, a communication request to a server such as a social network server, the communication request carrying the device identifier of the second communication device and a device identifier of the first communication device; and the server sends the device identifier of the first communication device and an adding request to the second communication device, to request the second communication device to add the first communication device as a friend. After confirmation information of the second communication device is received, the communication between the first communication device and the second communication device is established. When communication devices of a plurality of vehicles need to communicate with the second communication device of the second vehicle, vehicle owners of the plurality of vehicles all need to manually obtain the device identifier of the second communication device, for example, by means of scanning a code, and before communications are established, whether the second communication device allows to establish communication connections with all the communication devices of the plurality of vehicles needs to be verified. Manually adding a device identifier of a communication device consumes longer time, consequently, the entire communication process consumes longer time. In addition, a plurality of interactions needs to be performed between a communication device and a communication device and a server, consequently, more system resources are consumed.

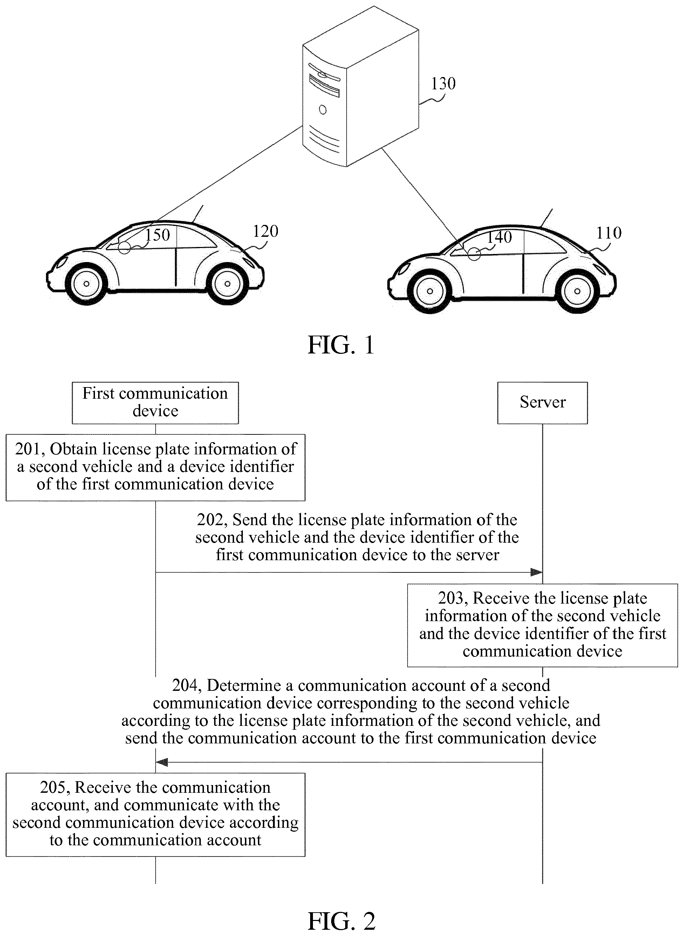

Referring to FIG. 1, FIG. 1 is a schematic structural diagram of an implementation environment according to an embodiment of this application. The implementation environment includes: a first vehicle 110, a second vehicle 120, a server 130, a first communication device 140, and a second communication device 150.

The first communication device 140 corresponds to the first vehicle 110, that is, is bond to the first vehicle 110, and has a data transmission capability. The first communication device 140 may be one electronic device, or a plurality of electronic devices. For example, the first communication device 140 is a first event data recorder in the first vehicle 110, or a first event data recorder and a social client in the first vehicle 110. The social client is an instant messaging application program, for example, MSN, WeChat, or QQ.

The second communication device 150 corresponds to the second vehicle 120, that is, is bond to the second vehicle 120, and has the data transmission capability. For example, the second communication device 150 is a second event data recorder in the second vehicle 120, or a mobile terminal hold by a vehicle owner of the second vehicle 120. A social client is installed in the mobile terminal, and the social client is an instant messaging application program, for example, MSN, WeChat, or QQ.

The server 130 may be one server, a server cluster including a plurality of servers, or a cloud computing center.

When the first communication device 140 is the first event data recorder, and the second communication device 150 is the second event data recorder, the server 130 is a background server of the event data recorders, and the server 130 stores a correspondence between a license plate number and a device identifier of an event data recorder. When the first communication device 140 is the first event data recorder and the social client, and the second communication device 150 is the mobile terminal, the server 130 stores a correspondence between a license plate number, a social account, and a device identifier of an event data recorder.

The second vehicle 120 is located in any direction of the first vehicle 110. For example, the second vehicle 120 is located right in front of the first vehicle 110, or the second vehicle 120 is located right behind the first vehicle 110, or the second vehicle 120 is located at the front left or the back left of the first vehicle 110, or the second vehicle 120 is located at the front right or the back right of the first vehicle 110.

The first communication device 140 is connected to the server 130 by using a wireless network.

The second communication device 150 is connected to the server 130 by using the wireless network.

Referring to FIG. 2, FIG. 2 is a flowchart of a communication method according to an exemplary embodiment of this application. This embodiment gives descriptions by using an example in which the communication method is applied in the implementation environment shown in FIG. 1. The communication method includes the following steps:

Step S201: A first communication device obtains license plate information of a second vehicle and a device identifier of the first communication device.

The license plate information of the second vehicle is a license plate image including a license plate number of the second vehicle, or the license plate number of the second vehicle.

When the license plate information of the second vehicle is the license plate image, the first communication device may capture the license plate image of the second vehicle. In this case, a position relationship between the second vehicle and the first vehicle relies on a direction of a camera in the first communication device.

To enable the first communication device to obtain the license plate information of the second vehicle, a license plate of the second vehicle needs to be ensured to be in a photography range of the camera of the first communication device, and the first communication device needs to ensured to extract the license plate information of the second vehicle from a captured image. For example, when the camera is located right in front of the first communication device, the second vehicle is located right in front of the first vehicle; when the camera is located right behind the first communication device, the second vehicle is located right behind the first vehicle; when the camera is located at the front left of the first communication device, the second vehicle is located at the front left of the first vehicle; when the camera is located at the back left of the first communication device, the second vehicle is located at the back left of the first vehicle; when the camera is located at the front right of the first communication device, the second vehicle is located at the front right of the first vehicle; and when the camera is located at the back right of the first communication device, the second vehicle is located at the back right of the first vehicle.

When the license plate information of the second vehicle is the license plate number, a user may manually input the license plate number of the second vehicle into the first communication device, that is, the first device obtains the license plate number of the second vehicle that is input by the user by means of manual input or voice input.

Step S202: The first communication device sends the license plate information of the second vehicle and the device identifier of the first communication device to a server.

Step S203: The server receives the license plate information of the second vehicle and the device identifier of the first communication device.

Step S204: The server determines a communication account of a second communication device corresponding to the second vehicle according to the license plate information of the second vehicle, and sends the communication account of the second communication device to the first communication device.

The server may determine, according to the device identifier of the first communication device, to send the communication account of the second communication device to the first communication device.

Step S205: The first communication device receives the communication account of the second communication device, and communicates with the second communication device according to the communication account of the second communication device.

Step S201, step S202, and step S205 may be independently implemented as an embodiment at the first communication device side, and step S203 and step S204 may be independently implemented as an embodiment at the server side.

Based on the above, in the communication method provided in this embodiment of this application, the first communication device obtains the license plate information of the second vehicle and the device identifier of the first communication device, and sends the license plate information of the second vehicle and the device identifier of the first communication device to the server, and the server determines the communication account of the second communication device corresponding to the second vehicle according to the license plate information of the second vehicle, and sends the communication account of the second communication device to the first communication device. Because the server determines the communication account of the second communication device by using the license plate information of the second vehicle that is sent by the first communication device corresponding to the first vehicle, after receiving the communication account of the second communication device, the first communication device may communicate with the second communication device, avoiding a problem that because a vehicle owner of the first vehicle does not have a contact method of a vehicle owner of the second vehicle, the vehicle owner of the first vehicle cannot communicate with the vehicle owner of the second vehicle, and achieving an effect that the vehicle owner of the first vehicle can conveniently contact with the vehicle owner of the second vehicle, and communicate with the vehicle owner of the second vehicle.

In an embodiment of this application, if a communication needs to be performed among strangers based on vehicles, first, vehicle owners are generally strangers, and a vehicle owner of a first vehicle may not obtain a device identifier of a second communication device of a second vehicle. Even the device identifier of the second communication device is obtained, and a communication with the second communication device is established, a subsequent communication may not be needed at any time because the strangers do not communicate with each other all the way. If a communication between a first communication device and the second communication device needs to be established, a method that may be used by the existing technology is as follows: The vehicle owner of the first vehicle needs to manually obtain the device identifier of the second communication device of the second vehicle, for example, by means of scanning a code or manually recording, initiates, by using the communication device of the first vehicle, a communication request to a server such as a social network server, the communication request carrying the device identifier of the second communication device and a device identifier of the first communication device; and the server sends the device identifier of the first communication device and an adding request to the second communication device, to request the second communication device to add the first communication device as a friend. After confirmation information of the second communication device is received, the communication between the first communication device and the second communication device is established. When communication devices of a plurality of vehicles need to communicate with the second communication device of the second vehicle, vehicle owners of the plurality of vehicles all need to manually obtain the device identifier of the second communication device, for example, by means of scanning a code, and before communications are established, whether the second communication device allows to establish communication connections with all the communication devices of the plurality of vehicles needs to be verified. Manually adding a device identifier of a communication device consumes longer time, consequently, the entire communication process consumes longer time. In addition, a plurality of interactions needs to be performed between a communication device and a communication device and a server, consequently, more system resources are consumed. In the embodiments of this application, a correspondence between first communication device and the second communication device is not established between the application steps. The vehicle owner of the first vehicle and a vehicle owner of the second vehicle may be strangers before. A vehicle needing to participate in the communication registers to a server in advance, and the server pre-stores a correspondence between license plate information of a vehicle and a communication account of a communication device of the vehicle. A communication device may obtain a communication account of the other vehicle by using the server and license plate information of the other vehicle, and establishes a communication with the other vehicle by using the communication account of the other vehicle. By using the technical solution of this application, a communication may be established between non-friends, for example, strangers met on the way, by using license plate information of vehicles and communication accounts of communication devices. Therefore, a whole communication process is relatively convenient, and consumes shorter time.

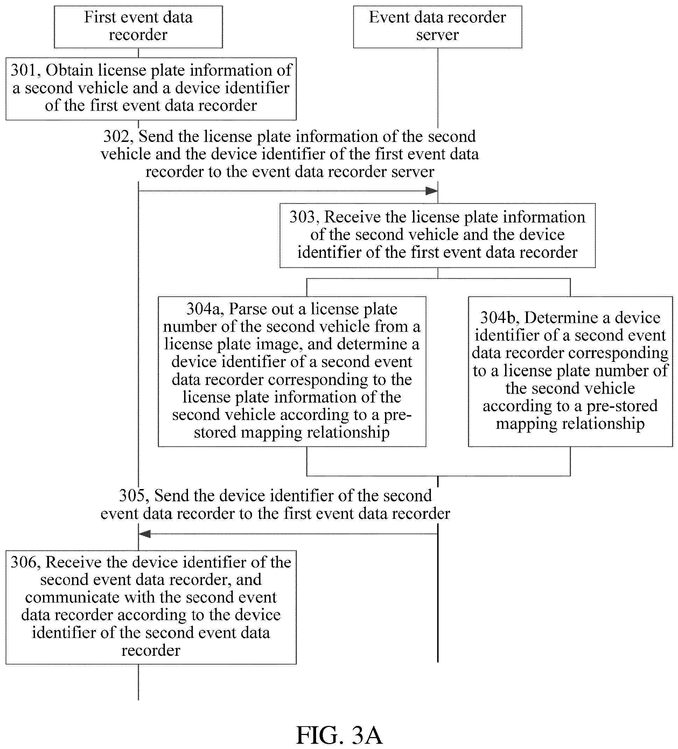

Referring to FIG. 3A, FIG. 3A is a flowchart of a communication method according to an exemplary embodiment of this application. This embodiment gives descriptions by using an example in which the recourse method is applied in the implementation environment shown in FIG. 1. When a server is an event data recorder server, a first communication device is a first event data recorder, a second communication device is a second event data recorder, and a communication account of the second communication device is a device identifier of the second event data recorder, the communication method includes the following steps:

Step S301: A first event data recorder obtains license plate information of a second vehicle and a device identifier of the first event data recorder.

When a first vehicle travels in a certain direction of the second vehicle, a vehicle owner of the first vehicle needs to communicate with a vehicle owner of the second vehicle, and the vehicle owner of the first vehicle starts, by means of triggering a shortcut key, a process of establishing a communication with the second vehicle. Specifically, after the shortcut key is triggered, the first event data recorder obtains the license plate information of the second vehicle and the device identifier of the first event data recorder. The shortcut key is disposed in a position that is easily touched by the vehicle owner. For example, the shortcut key is disposed on a steering wheel.

When the license plate information of the second vehicle is a license plate image captured by the first event data recorder, the first event data recorder photographs a license plate of the second vehicle, and obtains the license plate image. In this case, a position relationship between the second vehicle and the first vehicle relies on a direction of a camera in the first event data recorder. When the camera is located right in front of the first vehicle, the second vehicle is located right in front of the first vehicle; when the camera is located right behind the first vehicle, the second vehicle is located right behind the first vehicle; when the camera is located at the front left of the first vehicle, the second vehicle is located at the front left of the first vehicle; when the camera is located at the back left of the first vehicle, the second vehicle is located at the back left of the first vehicle; when the camera is located at the front right of the first vehicle, the second vehicle is located at the front right of the first vehicle; and when the camera is located at the back right of the first vehicle, the second vehicle is located at the back right of the first vehicle.

Alternatively, when the license plate information of the second vehicle is a license plate number parsed out by the first event data recorder from a captured license plate image, the first event data recorder photographs a license plate of the second vehicle, obtains the license plate image, and parses the license plate image to obtain the license plate number of the second vehicle; and alternatively, a user may input the license plate number of the second vehicle into the first event data recorder by means of manual input or voice input, and when the first event data recorder obtains the license plate number of the second vehicle that is input by the user by means of the manual input or voice input, the first event data recorder does not need to photograph the license plate of the second vehicle, and does not need to parse the license plate image of the second vehicle, that is, step S304a and step S304b are not performed.

Step S302: The first event data recorder sends the license plate information of the second vehicle and the device identifier of the first event data recorder to an event data recorder server.

Specifically, the first event data recorder sends the license plate image and the device identifier of the first event data recorder to the event data recorder server, or the first event data recorder sends the license plate number of the second vehicle and the device identifier of the first event data recorder to the event data recorder server.

Step S303: The event data recorder server receives the license plate information of the second vehicle and the device identifier of the first event data recorder.

When the license plate information of the second vehicle is the license plate image captured by the first event data recorder, step S304a is performed; and when the license plate information of the second vehicle is the license plate number parsed out by the first event data recorder from the captured license plate image, step S304b is performed.

Step S304a: The event data recorder server parses out a license plate number of the second vehicle from a license plate image, and determines a device identifier of a second event data recorder corresponding to the license plate information of the second vehicle according to a preset mapping relationship.

The mapping relationship stored in the event data recorder server is used for recording a correspondence between the license plate number of the second vehicle and the device identifier of the second event data recorder corresponding to the second vehicle.

Table 1 shows an example of a part of the preset mapping relationship in the event data recorder server.

**Table 1**

| License plate number | Device identifier of an event data recorder |
|---|---|
| JS W 123XX | Q123 |
| ZJ P 000XX | Q124 |
| BJ L 00XX0 | Q125 |
| JS K0XX12 | Q126 |

For example, when parsing out from the license plate image that the license plate number of the second vehicle is "ZJ P 000XX", the event data recorder server determines that the identifier of the second event data recorder corresponding to the license plate number of the second vehicle of "ZJ P 000XX" is "Q124".

Step S304b: The event data recorder server determines a device identifier of a second event data recorder corresponding to a license plate number of the second vehicle according to a preset mapping relationship.

Step S305: The event data recorder server sends the device identifier of the second event data recorder to the first event data recorder.

Step S306: The first event data recorder receives the device identifier of the second event data recorder, and communicates with the second event data recorder according to the device identifier of the second event data recorder.

After receiving the device identifier of the second event data recorder that is sent by the event data recorder server, the first event data recorder prompts, by using a voice method or a text method, the vehicle owner of the first vehicle to send a communication request to the second event data recorder, and after that the vehicle owner of the first vehicle sends the communication request to the second event data recorder is confirmed, the first event data recorder communicates with the second event data recorder; or after receiving the device identifier of the second event data recorder that is sent by the event data recorder server, the first event data recorder does not prompt the user, and directly communicates with the second event data recorder.

After the first event data recorder establishes a communication with the second event data recorder, the event data recorder server forwards a message, to implement the communication between the first event data recorder and the second event data recorder.

After the first event data recorder establishes the communication with the second event data recorder, when the first event data recorder sends a message to the second event data recorder, the first event data recorder sends the message carrying the device identifier of the second event data recorder to the event data recorder server, and after receiving the message sent by the first event data recorder, the event data recorder server determines the second event data recorder according to the device identifier of the second event data recorder, and forwards the message to the second event data recorder; similarly, when the second event data recorder sends a message to the first event data recorder, the second event data recorder sends the message carrying the device identifier of the first event data recorder to the event data recorder server, and after receiving the message sent by the second event data recorder, the event data recorder server determines the first event data recorder according to the device identifier of the first event data recorder, and forwards the message to the first event data recorder.

For example, in a traveling process of the first vehicle, the vehicle owner of the first vehicle finds that an object falls from the second vehicle ahead, the vehicle owner of the first vehicle triggers the shortcut key and uses an event data recorder to establish the communication with the second event data recorder by using the first event data recorder. The vehicle owner of the first vehicle then uses the first event data recorder to send a message of "you have an object falling down" to the second event data recorder. Specifically, the first event data recorder sends the message of "you have an object falling down" carrying the device identifier of the second event data recorder to the event data recorder server, the event data recorder server determines the second event data recorder according to the device identifier of the second event data recorder, and sends the message of "you have an object falling down" to the second event data recorder, and the vehicle owner of the second vehicle can check, by using the second event data recorder, the message of "you have an object falling down" sent by the vehicle owner of the first vehicle.

The foregoing step S301, step S302, and step S306 may be independently implemented as an embodiment at the first communication device side, and step S303, step S304a, step S304b, and step S305 may be independently implemented as an embodiment at the event data recorder server side.

Based on the above, in the communication method provided in this embodiment of this application, the first communication device obtains the license plate information of the second vehicle and the device identifier of the first communication device, and sends the license plate information of the second vehicle and the device identifier of the first communication device to the server, and the server determines the communication account of the second communication device corresponding to the second vehicle according to the license plate information of the second vehicle, and sends the communication account of the second communication device to the first communication device. Because the server determines the communication account of the second communication device by using the license plate information of the second vehicle that is sent by the first communication device corresponding to the first vehicle, after receiving the communication account of the second communication device, the first communication device may communicate with the second communication device, avoiding a problem that because the vehicle owner of the first vehicle does not have a contact method of the vehicle owner of the second vehicle, the vehicle owner of the first vehicle cannot communicate with the vehicle owner of the second vehicle, and achieving an effect that the vehicle owner of the first vehicle can conveniently contact with the vehicle owner of the second vehicle, and communicate with the vehicle owner of the second vehicle.

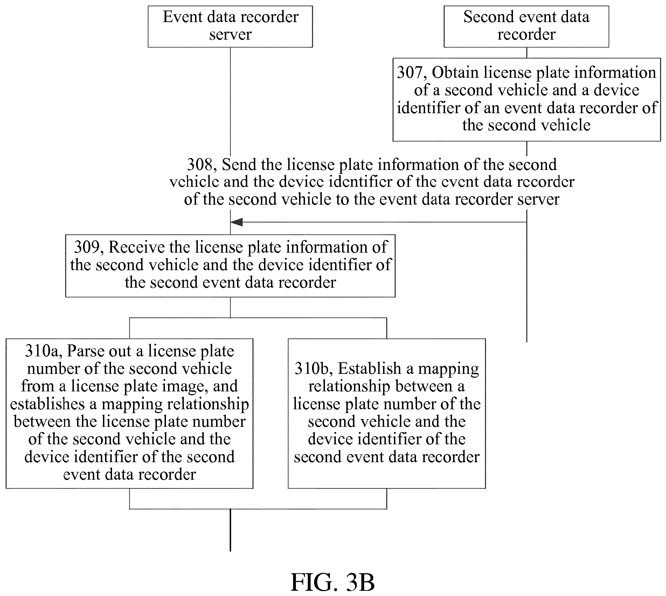

Furthermore, in this embodiment shown in FIG. 3A, before the server determines the communication account of the second communication device corresponding to the second vehicle according to the license plate information of the second vehicle, the second communication device further needs to send the license plate information of the second vehicle and an identifier of the second communication device to the event data recorder server. That is, the communication method further includes the following steps shown in FIG. 3B.

Step S307: The second event data recorder obtains license plate information of the second vehicle and the device identifier of an event data recorder of the second vehicle.

The license plate information of the second vehicle obtained by the second event data recorder is a license plate image obtained by the second event data recorder by means of photographing a license plate of the second vehicle, or is the license plate number of the second vehicle that is obtained by means of parsing the license plate image after the second event data recorder photographs the license plate of the second vehicle and obtains the license plate image.

Step S308: The second event data recorder sends the license plate information of the second vehicle and the device identifier of the event data recorder of the second vehicle to an event data recorder server.

Step S309: The event data recorder server receives the license plate information of the second vehicle and the device identifier of the second event data recorder.

When the license plate information is the license plate image captured by the second event data recorder, the event data recorder server performs step S310a; and when the license plate information is the license plate number parsed out by the second event data recorder from the captured license plate image, the event data recorder server performs step S310b.

Step S310a: The event data recorder server parses out a license plate number of the second vehicle from a license plate image, and establishes a mapping relationship between the license plate number of the second vehicle and the device identifier of the second event data recorder.

Step S310b: The event data recorder server establishes a mapping relationship between a license plate number of the second vehicle and the device identifier of the second event data recorder.

It needs to be noted that step S307 and step S310b may alternatively be performed before step S304a or step S304b. This is not limited in this embodiment of this application.

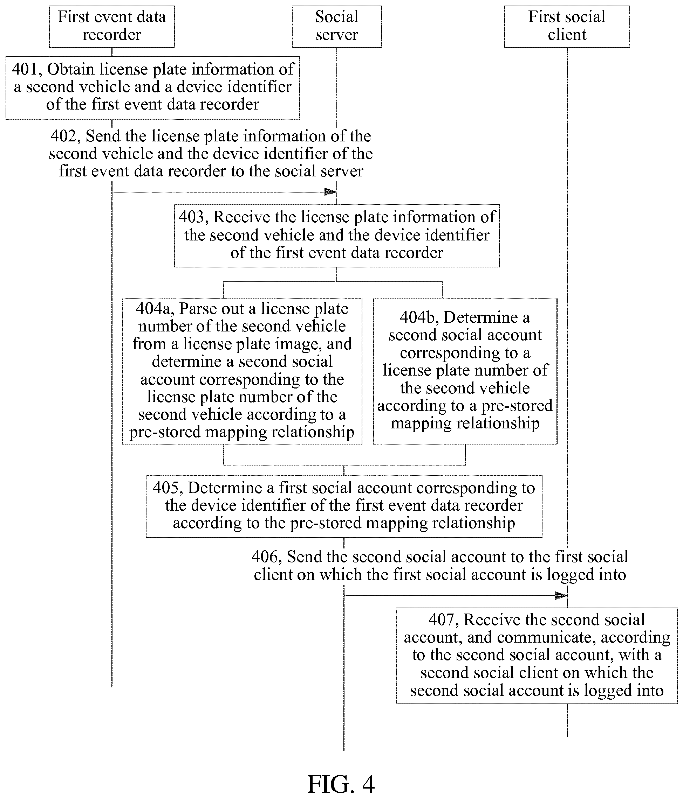

Referring to FIG. 4, FIG. 4 is a flowchart of a communication method according to another exemplary embodiment of this application. This embodiment gives descriptions by using an example in which the communication method is applied in the implementation environment shown in FIG. 1. When a server is a social server, a first communication device includes a first event data recorder and a first social client, a second communication device is a second social client, a communication account of the first communication device is a first social account, and a communication account of the second communication device is a second social account, the communication method includes the following steps.

Step S401: A first event data recorder obtains license plate information of a second vehicle and a device identifier of the first event data recorder.

In this embodiment, a position relationship between the second vehicle and a first vehicle relies on a direction of a camera in the first event data recorder. When the camera is located right in front of the first event data recorder, the second vehicle is located right in front of the first vehicle; when the camera is located right behind the first event data recorder, the second vehicle is located right behind the first vehicle; when the camera is located at the front left of the first event data recorder, the second vehicle is located at the front left of the first vehicle; when the camera is located at the back left of the first event data recorder, the second vehicle is located at the back left of the first vehicle; when the camera is located at the front right of the first event data recorder, the second vehicle is located at the front right of the first vehicle; and when the camera is located at the back right of the first event data recorder, the second vehicle is located at the back right of the first vehicle. A specific implementation process of this step is described in detail in the foregoing step S301, and details are not described herein again.

It needs to be noted that besides that the first communication device automatically obtains the license plate information of the second vehicle, a user may alternatively input a license plate number of the second vehicle into the first event data recorder by means of manual input or voice input, and when the first event data recorder obtains the license plate number of the second vehicle that is input by the user by means of the manual input or voice input, the first event data recorder does not need to photograph a license plate of the second vehicle, and does not need to parse a license plate image of the second vehicle, that is, step S404a and step S404b are not performed.

Step S402: The first event data recorder sends the license plate information of the second vehicle and the device identifier of the first event data recorder to a social server.

The first event data recorder sends the license plate image and the device identifier of the first event data recorder to the social server, or the first event data recorder sends the license plate number of the second vehicle and the device identifier of the first event data recorder to the social server.

Step S403: The social server receives the license plate information of the second vehicle and the device identifier of the first event data recorder.

When the license plate information is the license plate image captured by the first event data recorder, the social server performs step S404a; and when the license plate information is the license plate number parsed out by the first event data recorder from the captured license plate image, the social server performs step S404b.

Step S404a: The social server parses out a license plate number of the second vehicle from a license plate image, and determines a second social account corresponding to the license plate number of the second vehicle according to a preset mapping relationship.

The preset mapping relationship in the social server is used for recording a correspondence between a license plate number, a social account, and a device identifier of an event data recorder. That is, the social server stores a correspondence between a license plate number of the first vehicle, the first social account, and the device identifier of the first event data recorder, and a correspondence between the license plate number of the second vehicle, the second social account, and a device identifier of the second event data recorder.

Table 2 shows an example of a part of the preset mapping relationship in the social server.

**Table 2**

| License plate number | Social account | Device identifier of an event data recorder |
|---|---|---|
| JS S 99XX1 | Xiao Wang | Q1 |
| GD W 00xx2 | Xiao Zhao | Q2 |
| JS Q 90XX3 | Xiao Li | Q3 |

For example, when parsing out from the license plate image that the license plate number of the second vehicle is "JS S 99XX1", the social server determines that the second social account corresponding to the license plate number of "JS S 99XX1" is "Xiao Wang".

Step S404b: The social server determines a second social account corresponding to a license plate number of the second vehicle according to a preset mapping relationship.

The social serve determines the second social account corresponding to the license plate number of the second vehicle according to the received license plate number of the second vehicle and the preset mapping relationship.

Step S405: The social server determines a first social account corresponding to the device identifier of the first event data recorder according to the preset mapping relationship.

An example in which the mapping relationship stored in the social server is Table 2 is used as an example. When the received device identifier of the first event data recorder is "Q3", the social server determines that the first social account is "Xiao Li".

Step S406: The social server sends the second social account to a first social client on which the first social account is logged into.

Step S407: The first social client receives the second social account, and communicates, according to the second social account, with a second social client on which the second social account is logged into.

After the first social client establishes a communication with the second social client, the vehicle owner of the first vehicle may implement the communication with the vehicle owner of the second vehicle by using the first social account logged into on the first social client and the second social account logged into on the second social client.

After the first social client receives the second social account sent by the social server, the first social client prompts, by using a voice method or a text method, the vehicle owner of the first vehicle to send a communication request to the second social account, and after that the vehicle owner of the first vehicle sends the communication request to the second social account is confirmed, the first social client communicates with the second social client; or after receiving the second social account sent by the social server, the first social client does not prompt the vehicle owner of the first vehicle, and directly communicates with the second social client.

After the first social client establishes the communication with the second social client, the social server forwards a message, to implement the communication between the vehicle owner of the first vehicle and the vehicle owner of the second vehicle.

After the first social client establishes the communication with the second social client, when the first social client on which the first social account is logged into sends a message to the second social client on which the second social account is logged into, the first social client sends the message carrying the second social account to the social server, and after receiving the message sent by the first social client, the social server determines the second social client according to the second social account, and forwards the message to the second social client; similarly, the second social client on which the second social account is logged into sends a message to the first social client on which the first social account is logged into, the second social client sends the message carrying the first social account to the social server, and after receiving the message sent by the second social client, the social server determines the first social client according to the first social account, and forwards the message to the first social client.

For example, in a traveling process of the first vehicle, the vehicle owner of the first vehicle finds that an object falls from the second vehicle ahead, the vehicle owner of the first vehicle triggers a shortcut key, and the first social client on which the first social account is logged into establishes the communication with the second social client on which the second social account is logged into. The vehicle owner of the first vehicle uses the first social client on which the first social account is logged into to send a message of "you have an object falling down" to the second social client. Specifically, the first social client sends the message of "you have an object falling down" carrying the second social account to the social server, the social server determines the second social client according to the second social account, and sends the message of "you have an object falling down" to the second social client, and the vehicle owner of the second vehicle can check, by using the second social client on which the second social account is logged into, the message of "you have an object falling down" sent by the vehicle owner of the first vehicle.

The foregoing step S401, step S402, and step S407 may be independently implemented as a claim at the first communication device side, and step S403 to step S406 may be independently implemented as a claim at the social server side.

Based on the above, in the communication method provided in this embodiment of this application, the first communication device obtains the license plate information of the second vehicle and the device identifier of the first communication device, and sends the license plate information of the second vehicle and the device identifier of the first communication device to the server, and the server determines the communication account of the second communication device corresponding to the second vehicle according to the license plate information of the second vehicle, and sends the communication account of the second communication device to the first communication device. Because the server determines the communication account of the second communication device by using the license plate information of the second vehicle that is sent by the first communication device corresponding to the first vehicle, after receiving the communication account of the second communication device, the first communication device may communicate with the second communication device, avoiding a problem that because the vehicle owner of the first vehicle does not have a contact method of the vehicle owner of the second vehicle, the vehicle owner of the first vehicle cannot communicate with the vehicle owner of the second vehicle, and achieving an effect that the vehicle owner of the first vehicle can conveniently contact with the vehicle owner of the second vehicle, and communicate with the vehicle owner of the second vehicle.

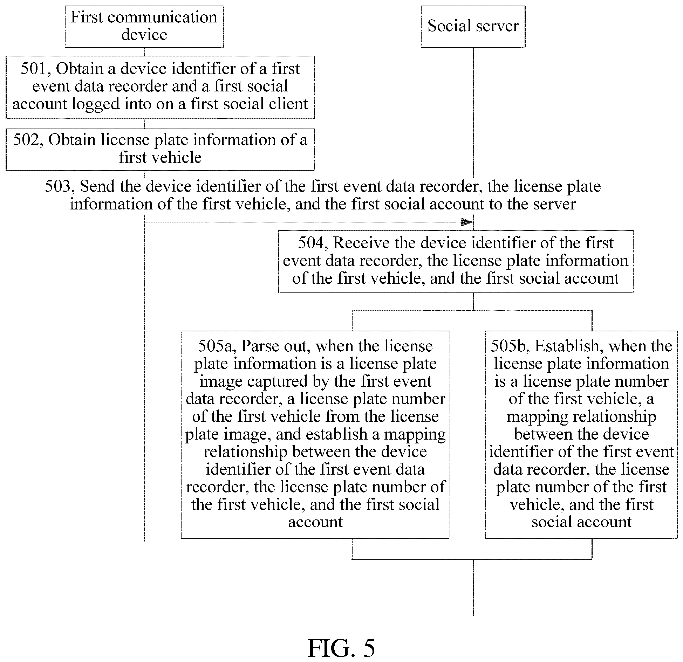

Furthermore, in this embodiment shown in FIG. 4, before the first communication device obtains the license plate information of the second vehicle and the device identifier of the first communication device, the first communication device further needs to send license plate information of the first vehicle and the identifier of the first communication device to the social server. That is, before step S401, the communication method further includes the following steps shown in FIG. 5.

Step S501: A first communication device obtains a device identifier of a first event data recorder and a first social account logged into on a first social client.

When the first communication device includes the first event data recorder and the first social client, the first social client may obtain the device identifier of the first event data recorder and the first social account logged into on the first social client; or the first event data recorder may obtain the device identifier of the first event data recorder and the first social account logged into on the first social client.

Step S502: The first communication device obtains license plate information of a first vehicle.

In this embodiment, the first event data recorder may obtain the license plate information of the first vehicle, or the first social client may obtain the license plate information of the first vehicle.

Specifically, when the first communication device includes the first event data recorder and the first social client, the license plate information of the first vehicle may be a license plate image captured by the first event data recorder, or a license plate number of the first vehicle that is parsed out by the first event data recorder from the license plate image, or is the license plate number of the first vehicle that is manually input into the first social client by a user. This is not limited in this embodiment of this application.

It needs to be noted that an execution sequence of the foregoing step S501 and step S502 may be reversed. This is not limited in this embodiment of this application.

Step S503: The first communication device sends the device identifier of the first event data recorder, the license plate information of the first vehicle, and the first social account to a server.

Specifically, the first event data recorder sends the device identifier of the first event data recorder, the license plate information of the first vehicle, and the first social account to the server, or the first social client sends the device identifier of the first event data recorder, the license plate information of the first vehicle, and the first social account to the server.

Step S504: The server receives the device identifier of the first event data recorder, the license plate information of the first vehicle, and the first social account.

The social server receives the device identifier of the first event data recorder, the license plate information of the first vehicle, and the first social account.

When the license plate information is the license plate image captured by the first event data recorder, the server performs step S505a; and when license plate information is the license plate number of the first vehicle, the server performs step S505b.

Step S505a: The server parses out, when the license plate information is a license plate image captured by the first event data recorder, a license plate number of the first vehicle from the license plate image, and establishes a mapping relationship between the device identifier of the first event data recorder, the license plate number of the first vehicle, and the first social account.

Step S505b: The server establishes, when the license plate information is a license plate number of the first vehicle, a mapping relationship between the device identifier of the first event data recorder, the license plate number of the first vehicle, and the first social account.

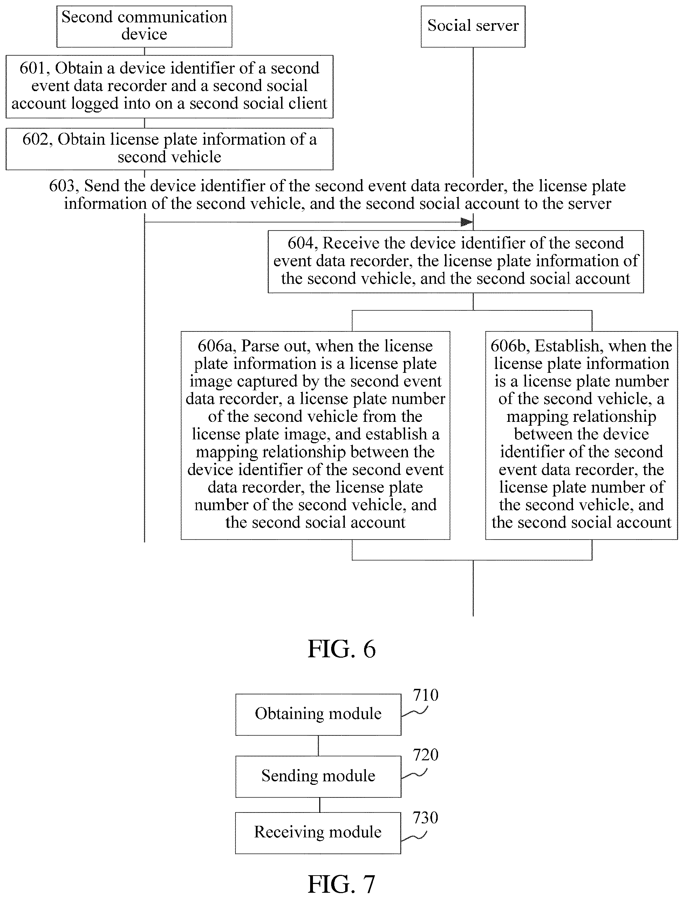

Furthermore, in this embodiment shown in FIG. 4, before the server determines the communication account of the second communication device corresponding to the second vehicle according to the license plate information of the second vehicle, the second communication device further needs to send the license plate information of the second vehicle and an identifier of the second communication device to the social server. That is, before step S403a or step S403b, the communication method further includes the following steps shown in FIG. 6.

Step S601: A second communication device obtains a device identifier of a second event data recorder and a second social account logged into on a second social client.

When the second communication device includes the second event data recorder and the second social client, the second social client may obtain the device identifier of the second event data recorder and the second social account logged into on the second social client; or the second event data recorder may obtain the device identifier of the second event data recorder and the second social account logged into on the second social client.

Step S602: The second communication device obtains license plate information of a second vehicle.

In this embodiment, the second event data recorder may obtain the license plate information of the second vehicle, or the second social client may obtain the second license plate information.

Specifically, when the second communication device includes the second event data recorder and the second social client, the license plate information of the second vehicle may be a license plate image captured by the second event data recorder, or a license plate number of the second vehicle that is parsed out by the second event data recorder from the license plate image, or is the license plate number of the second vehicle that is manually input into the second social client by a user. This is not limited in this embodiment of this application.

The second event data recorder obtains the license plate information of the second vehicle, or the second social client obtains the license plate information of the second vehicle.

It needs to be noted that an execution sequence of the foregoing step S601 and step S602 may be reversed. This is not limited in this embodiment of this application.

Step S603: The second communication device sends the device identifier of the second event data recorder, the license plate information of the second vehicle, and the second social account to a server.

Specifically, the second event data recorder sends the device identifier of the second event data recorder, the license plate information of the second vehicle, and the second social account to the server, or the second social client sends the device identifier of the second event data recorder, the license plate information of the second vehicle, and the second social account to the server.

Step S604: The server receives the device identifier of the second event data recorder, the license plate information of the second vehicle, and the second social account.

The social server receives the device identifier of the second event data recorder, the license plate information of the second vehicle, and the second social account.

When the license plate information is the license plate image captured by the second event data recorder, the server performs step S605a; and when license plate information is the license plate number of the second vehicle, the server performs step S605b.

Step S605a: The server parses out, when the license plate information is a license plate image captured by the second event data recorder, a license plate number of the second vehicle from the license plate image, and establishes a mapping relationship between the device identifier of the second event data recorder, the license plate number of the second vehicle, and the second social account.

Step S605b: The server establishes, when the license plate information is a license plate number of the second vehicle, a mapping relationship between the device identifier of the second event data recorder, the license plate number of the second vehicle, and the second social account.

Referring to FIG. 7, FIG. 7 is a structural block diagram of a communication apparatus according to an exemplary embodiment of this application. The communication apparatus may be implemented, by using software, hardware, or a combination thereof, as all or part of the first communication device that can provide a communication method. The apparatus includes:
an obtaining module 710, configured to obtain license plate information of a second vehicle and a device identifier of a first communication device;
a sending module 720, configured to send the license plate information of the second vehicle and the device identifier of the first communication device obtained by the obtaining module 710 to a server, the server being connected to the first communication device corresponding to the first vehicle, and the server being configured to: determine a communication account of a second communication device corresponding to the second vehicle according to the license plate information of the second vehicle, and send the communication account to the first communication device; and
a receiving module 730, configured to: receive the communication account, and communicate with the second communication device according to the communication account.

Based on the above, in the communication apparatus provided in this embodiment of this application, the first communication device obtains the license plate information of the second vehicle and the device identifier of the first communication device, and sends the license plate information of the second vehicle and the device identifier of the first communication device to the server, and the server determines the communication account of the second communication device corresponding to the second vehicle according to the license plate information of the second vehicle, and sends the communication account of the second communication device to the first communication device. Because the server determines the communication account of the second communication device by using the license plate information of the second vehicle that is sent by the first communication device corresponding to the first vehicle, after receiving the communication account of the second communication device, the first communication device may communicate with the second communication device, avoiding a problem that because a vehicle owner of the first vehicle does not have a contact method of a vehicle owner of the second vehicle, the vehicle owner of the first vehicle cannot communicate with the vehicle owner of the second vehicle, and achieving an effect that the vehicle owner of the first vehicle can conveniently contact with the vehicle owner of the second vehicle, and communicate with the vehicle owner of the second vehicle.

Referring to FIG. 7, FIG. 7 is a structural block diagram of a communication apparatus according to another exemplary embodiment of this application. The communication apparatus may be implemented, by using software, hardware, or a combination thereof, as all or part of the first communication device that can provide a communication method. The apparatus includes:
an obtaining module 710, configured to obtain license plate information of a second vehicle and a device identifier of a first communication device;
a sending module 720, configured to send the license plate information of the second vehicle and the device identifier of the first communication device obtained by the obtaining module 710 to a server, the server being connected to the first communication device corresponding to the first vehicle, and the server being configured to: determine a communication account of a second communication device corresponding to the second vehicle according to the license plate information of the second vehicle, and send the communication account to the first communication device; and
a receiving module 730, configured to: receive the communication account, and communicate with the second communication device according to the communication account.

The server is an event data recorder server, the first communication device is a first event data recorder, the second communication device is a second event data recorder, and the communication account of the second communication device is a device identifier of the second event data recorder.

The server is a social server, the first communication device includes a first event data recorder and a first social client, the second communication device is a second social client, a communication account of the first communication device is a first social account, and a communication account of the second communication device is a second social account.

The obtaining module 710 is specifically configured to obtain, by the first event data recorder, the license plate information of the second vehicle and a device identifier of the first event data recorder.

The sending module 720 is specifically configured to send, by the first event data recorder, the license plate information of the second vehicle and the device identifier of the first event data recorder to the social server.

Based on the above, in the communication apparatus provided in this embodiment of this application, the first communication device obtains the license plate information of the second vehicle and the device identifier of the first communication device, and sends the license plate information of the second vehicle and the device identifier of the first communication device to the server, and the server determines the communication account of the second communication device corresponding to the second vehicle according to the license plate information of the second vehicle, and sends the communication account of the second communication device to the first communication device. Because the server determines the communication account of the second communication device by using the license plate information of the second vehicle that is sent by the first communication device corresponding to the first vehicle, after receiving the communication account of the second communication device, the first communication device may communicate with the second communication device, avoiding a problem that because a vehicle owner of the first vehicle does not have a contact method of a vehicle owner of the second vehicle, the vehicle owner of the first vehicle cannot communicate with the vehicle owner of the second vehicle, and achieving an effect that the vehicle owner of the first vehicle can conveniently contact with the vehicle owner of the second vehicle, and communicate with the vehicle owner of the second vehicle.

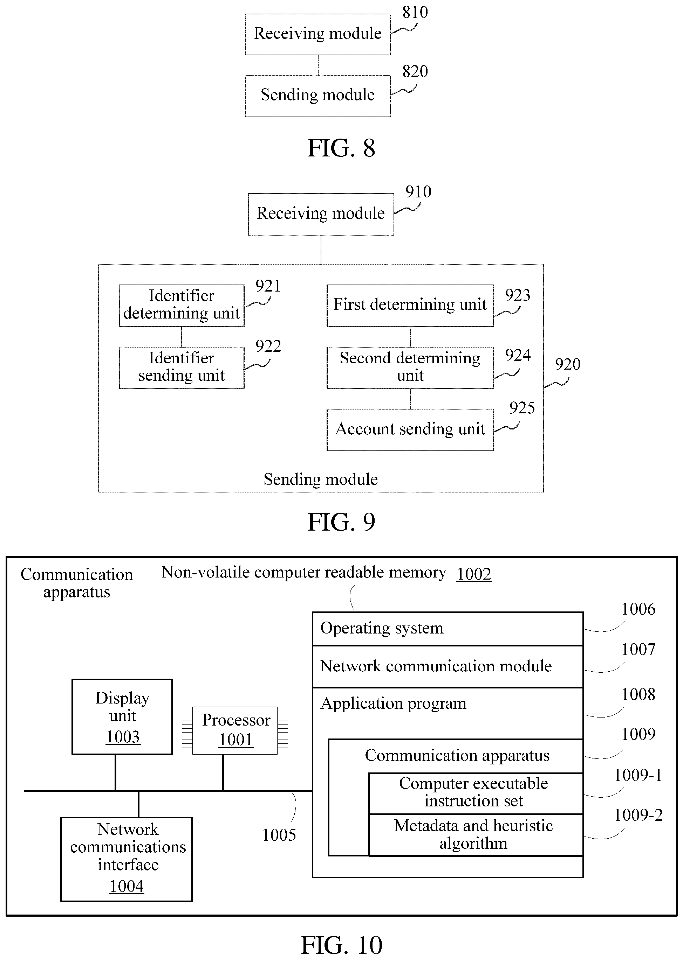

Referring to FIG. 8, FIG. 8 is a structural block diagram of a communication apparatus according to another exemplary embodiment of this application. The communication apparatus may be implemented, by using software, hardware, or a combination thereof, as all or part of the first communication device that can provide a communication method. The apparatus includes:
a receiving module 810, configured to receive license plate information of a second vehicle and a device identifier of a first communication device, the license plate information of the second vehicle being obtained and sent by the first communication device; and
a sending module 820, configured to: determine a communication account of a second communication device corresponding to the second vehicle according to the license plate information of the second vehicle that is received by the receiving module 810, and send the communication account to the first communication device, the first communication device being configured to communicate with the second communication device according to the communication account.

Based on the above, in the communication apparatus provided in this embodiment of this application, the first communication device obtains the license plate information of the second vehicle and the device identifier of the first communication device, and sends the license plate information of the second vehicle and the device identifier of the first communication device to the server, and the server determines the communication account of the second communication device corresponding to the second vehicle according to the license plate information of the second vehicle, and sends the communication account of the second communication device to the first communication device. Because the server determines the communication account of the second communication device by using the license plate information of the second vehicle that is sent by the first communication device corresponding to the first vehicle, after receiving the communication account of the second communication device, the first communication device may communicate with the second communication device, avoiding a problem that because a vehicle owner of the first vehicle does not have a contact method of a vehicle owner of the second vehicle, the vehicle owner of the first vehicle cannot communicate with the vehicle owner of the second vehicle, and achieving an effect that the vehicle owner of the first vehicle can conveniently contact with the vehicle owner of the second vehicle, and communicate with the vehicle owner of the second vehicle.

Referring to FIG. 9, FIG. 9 is a structural block diagram of a communication apparatus according to another exemplary embodiment of this application. The communication apparatus may be implemented, by using software, hardware, or a combination thereof, as all or part of the first communication device that can provide a communication method. The apparatus includes:
a receiving module 910, configured to receive license plate information of a second vehicle and a device identifier of a first communication device, the license plate information of the second vehicle being obtained and sent by the first communication device; and
a sending module 920, configured to: determine a communication account of a second communication device corresponding to the second vehicle according to the license plate information of the second vehicle that is received by the receiving module 910, and send the communication account to the first communication device, the first communication device being configured to communicate with the second communication device according to the communication account.

A server is an event data recorder server, the first communication device is a first event data recorder, the second communication device is a second event data recorder, and the communication account of the second communication device is a device identifier of the second event data recorder.

The sending module 920 includes:
an identifier determining unit 921, configured to: parse out, when the license plate information is a license plate image captured by the first event data recorder, a license plate number of the second vehicle from the license plate image, and determine the device identifier of the second event data recorder corresponding to the license plate number of the second vehicle according to a preset mapping relationship; or determine, when the license plate information is a license plate number parsed out by the first event data recorder from a captured license plate image, the device identifier of the second event data recorder corresponding to the license plate number of the second vehicle according to a preset mapping relationship; and
an identifier sending unit 922, configured to send the device identifier of the second event data recorder to the first event data recorder,
the preset mapping relationship being used for recording a correspondence between the license plate number and the device identifier of the second event data recorder.

The server is a social server, the first communication device includes the first event data recorder and a first social client, the second communication device is a second social client, a communication account of the first communication device is a first social account, and the communication account of the second communication device is a second social account.

The sending module 920 includes:
a first determining unit 923, configured to: parse out, when the license plate information is a license plate image captured by the first event data recorder, a license plate number of the second vehicle from the license plate image, and determine the second social account corresponding to the license plate number of the second vehicle according to a preset mapping relationship; or determine, when the license plate information is a license plate number parsed out by the first event data recorder from a captured license plate image, the second social account corresponding to the license plate number of the second vehicle according to a preset mapping relationship; and
a second determining unit 924, configured to: determining the first social account corresponding to a device identifier of the first event data recorder according to the preset mapping relationship; and
an account sending unit 925, configured to send the second social account to the first social client on which the first social account is logged into.

Based on the above, in the communication apparatus provided in this embodiment of this application, the first communication device obtains the license plate information of the second vehicle and the device identifier of the first communication device, and sends the license plate information of the second vehicle and the device identifier of the first communication device to the server, and the server determines the communication account of the second communication device corresponding to the second vehicle according to the license plate information of the second vehicle, and sends the communication account of the second communication device to the first communication device. Because the server determines the communication account of the second communication device by using the license plate information of the second vehicle that is sent by the first communication device corresponding to the first vehicle, after receiving the communication account of the second communication device, the first communication device may communicate with the second communication device, avoiding a problem that because a vehicle owner of the first vehicle does not have a contact method of a vehicle owner of the second vehicle, the vehicle owner of the first vehicle cannot communicate with the vehicle owner of the second vehicle, and achieving an effect that the vehicle owner of the first vehicle can conveniently contact with the vehicle owner of the second vehicle, and communicate with the vehicle owner of the second vehicle.

FIG. 10 is a schematic structural diagram of a communication apparatus according to an embodiment of this application. As shown in FIG. 10, the apparatus includes: a processor 1001, a non-volatile computer readable memory 1002, a display unit 1003, and a network communications interface 1004. These components perform communication through a bus 1005.

In this embodiment, the memory 1002 stores multiple program modules, including an operating system 1006, a network communication module 1007 and an application program 1008.

The processor 1001 may read various modules (not shown) included in the application program in the memory 1002, to execute various functional applications and data processing. The processor 1001 in this embodiment may be one or more, and may be a CPU, a processing unit/module, an ASIC, a logical module, a programmable gate array, or the like.

The application program 1008 may include a communication module 1009. The communication module 1009 may include a computer executable instruction set 1009-1 formed by each functional module in the apparatuses shown in FIG. 7, FIG. 8. or FIG. 9, and a corresponding metadata and heuristic algorithm 1009-2. These computer executable instruction sets may be executed by the processor 1001 to complete the methods shown in FIG. 2 to FIG. 6 or the functions of the apparatuses shown in FIG. 7, FIG. 8. or FIG. 9.

In this embodiment, the network communications interface 1004 coordinate with the network communication module 1007 to complete receiving and transmission of various network signals of the communication apparatus.

The display unit 1003 has a display panel, for example, a liquid crystal display, configured to complete input and display of relevant information.

In addition, functional modules in the embodiments of this application may be integrated into one processing unit, or each of the modules may exist alone physically, or two or more modules may be integrated into one unit. The integrated unit may be implemented in a form of hardware, or may be implemented in a form of a software functional unit. The functional modules in the embodiments may be located on one terminal or network node, or may be distributed on a plurality of terminals or network nodes.

It needs to be noted that: when the communication apparatus provided in the foregoing embodiments performs the communication method, only divisions of the foregoing functional modules are described by using an example. During practical application, the foregoing functions may be allocated to and completed by different functional modules according to the requirements, that is, the internal structure of the device is divided into different functional modules, so as to complete all or part of the functions described above. In addition, the communication method provided in the foregoing embodiments belongs to the same concept as the communication apparatus. For a specific implementation process of the communication apparatus, refer to the method embodiments, and details are not described herein again.

The sequence numbers of the foregoing embodiments of this application are merely for description purpose but do not indicate the preference of the embodiments.

A person of ordinary skill in the art may understand that all or some of the steps of the foregoing embodiments may be implemented by using hardware, or may be implemented by a program instructing relevant hardware. The program may be stored in a computer readable storage medium. The above-mentioned storage medium may be a read-only memory, a magnetic disk, an optical disc, or the like.

The above descriptions are merely preferred embodiments of this application, but not intended to limit this application.

## Claims

1. A vehicle-based communication method, applied to a vehicle-based communication system, the communication system comprising a first computing device acting as a first communication device (140) corresponding to a first vehicle (110), and a second computing device acting as a server (130) connected to the first communication device, and the method comprising:
obtaining, by the first communication device, license plate information of a second vehicle and a device identifier of the first communication device (201, 401);
sending, by the first communication device, the license plate information of the second vehicle and the device identifier of the first communication device to the server (202);
receiving, by the server, the license plate information of the second vehicle and the device identifier of the first communication device (203, 403);
determining, by the server, a communication account of a second communication device corresponding to the second vehicle according to the license plate information of the second vehicle, and sending the communication account of the second communication device to the first communication device (204); and
receiving, by the first communication device, the communication account of the second communication device, and communicating with the second communication device according to the communication account of the second communication device (205);
wherein the server is a social network server, the first communication device comprises a first event data recorder and a first social network client, the second communication device is a second social network client, a communication account of the first communication device is a first social network account, and the communication account of the second communication device is a second social network account;
wherein the obtaining, by the first communication device, license plate information of a second vehicle and a device identifier of the first communication device comprises:
after a shortcut key is triggered by a vehicle owner of the first vehicle when the vehicle owner of the first vehicle needs to communicate with a vehicle owner of the second vehicle,
obtaining, by the first event data recorder, the license plate information of the second vehicle and a device identifier of the first event data recorder;
when the license plate information of the second vehicle is a license plate image of the second vehicle, taking a photograph of a license plate of the second vehicle, by the first event data recorder, and obtaining the license plate image of the second vehicle; and
when the license plate information of the second vehicle is a license plate number of the second vehicle, taking a photograph of a license plate of the second vehicle, by the first event data recorder, obtaining a license plate image and parsing the license plate image to obtain the license plate number of the second vehicle;
wherein the sending, by the first communication device, the license plate information of the second vehicle and the device identifier of the first communication device to the server comprises:
sending, by the first event data recorder, the license plate information of the second vehicle and the device identifier of the first event data recorder to the social network server (402);
wherein the determining and the sending, by the server, the communication account of the second communication device to the first communication device comprises:
determining (405), by the social network server, the first social network account corresponding to the device identifier of the first event data recorder according to a preset mapping relationship, the preset mapping relationship being used for recording a correspondence between a license plate number, a social network account, and a device identifier of an event data recorder; and
sending (406), by the social network server, the second social network account to the first social network client on which the first social network account is logged into;
wherein the receiving, by the first communication device, the communication account of the second communication device, and communicating with the second communication device according to the communication account of the second communication device comprises:
receiving (407), by the first social network client, the second social network account, and directly establishing a communication, according to the second social network account, with the second social network client on which the second social network account is logged into.

2. The method according to claim 1, wherein the determining, by the server, a communication account of a second communication device corresponding to the second vehicle according to the license plate information of the second vehicle comprises:
parsing out (404a), by the social network server when the license plate information of the second vehicle is a license plate image of the second vehicle that is captured by the first event data recorder, a license plate number of the second vehicle from the license plate image, and determining the second social network account corresponding to the license plate number of the second vehicle according to the preset mapping relationship; or determining (404b), by the social network server when the license plate information of the second vehicle is a license plate number parsed out by the first event data recorder from a captured license plate image of the second vehicle, the second social network account corresponding to the license plate number of the second vehicle according to the preset mapping relationship.

3. The method according to claim 2, before the obtaining, by the first communication device, license plate information of a second vehicle and a device identifier of the first communication device, further comprising:
obtaining (501), by the first communication device, the device identifier of the first event data recorder and the first social network account logged into on the first social network client;
obtaining (502), by the first communication device, license plate information of the first vehicle;
sending (503), by the first communication device, the device identifier of the first event data recorder, the license plate information of the first vehicle, and the first social network account to the server;
receiving (504), by the server, the device identifier of the first event data recorder, the license plate information of the first vehicle, and the first social network account; and
parsing out (505a), by the server when the license plate information is a license plate image of the first vehicle, a license plate number of the first vehicle from the license plate image, and establishing the preset mapping relationship between the device identifier of the first event data recorder, the license plate number of the first vehicle, and the first social network account; or establishing (505b), by the server when the license plate information is a license plate number of the first vehicle, the preset mapping relationship between the device identifier of the first event data recorder, the license plate number of the first vehicle, and the first social network account, the first communication device being the first event data recorder, or the first social client on which the first social account is logged into.

4. The method according to claim 2, before the determining, by the server, a communication account of a second communication device corresponding to the second vehicle according to the license plate information of the second vehicle, further comprising:
obtaining (601), by the second communication device, the device identifier of the second event data recorder and the second social network account logged into on the second social network client;
obtaining (602), by the second communication device, license plate information of the second vehicle;
sending (603), by the second communication device, the device identifier of the second event data recorder, the license plate information of the second vehicle, and the second social network account to the server;
receiving (604), by the server, the device identifier of the second event data recorder, the license plate information of the second vehicle, and the second social network account; and
parsing (606a), by the server when the license plate information is the license plate image of the second vehicle, the license plate number of the second vehicle from the license plate image of the second vehicle, and establishing the preset mapping relationship between the device identifier of the second event data recorder, the license plate number of the second vehicle, and the second social network account; or establishing (606b), by the server when the license plate information is the license plate number of the second vehicle, the preset mapping relationship between the device identifier of the second event data recorder, the license plate number of the second vehicle, and the second social network account,
the second communication device being the second event data recorder, or the second social network client on which the second social network account is logged into.

5. A vehicle-based communication system, the communication system comprising: a first communication device (140) corresponding to a first vehicle (110), and a server (130) connected to the first communication device, and the system comprising:
the first communication device, configured to: obtain license plate information of a second vehicle and a device identifier of the first communication device, and send the license plate information of the second vehicle and the device identifier of the first communication device to the server; and
the server, configured to: receive the license plate information of the second vehicle and the device identifier of the first communication device; and determine a communication account of a second communication device corresponding to the second vehicle according to the license plate information of the second vehicle, and send the communication account of the second communication device to the first communication device,
the first communication device being configured to: receive the communication account of the second communication device, and communicate with the second communication device according to the communication account;
wherein the server is a social network server, the first communication device comprises a first event data recorder and a first social network client, the second communication device is a second social network client, a communication account of the first communication device is a first social network account, and the communication account of the second communication device is a second social network account;
the first communication device is configured to obtain the license plate information of the second vehicle and a device identifier of the first event data recorder, and send the license plate information of the second vehicle and the device identifier of the first event data recorder to the social network server;
wherein the first event data recorder is configured to, after a shortcut key is triggered by a vehicle owner of the first vehicle when the vehicle owner of the first vehicle needs to communicate with a vehicle owner of the second vehicle, obtain the license plate information of the second vehicle and the device identifier of the first event data recorder;
wherein the first event data recorder is configured to, when the license plate information of the second vehicle is a license plate image of the second vehicle, take a photograph of a license plate of the second vehicle, and obtain the license plate image of the second vehicle; and when the license plate information of the second vehicle is a license plate number of the second vehicle, take a photograph of a license plate of the second vehicle, obtain a license plate image and parse the license plate image to obtain the license plate number of the second vehicle;
the social network server is configured to determine the first social network account corresponding to the device identifier of the first event data recorder according to a preset mapping relationship, the preset mapping relationship being used for recording a correspondence between a license plate number, a social network account, and a device identifier of an event data recorder; and send the second social network account to the first social network client on which the first social network account is logged into;
the first social network client is configured to receive the second social network account, and directly establish a communication, according to the second social network account, with the second social network client on which the second social network account is logged into.

## Patentansprüche

1. Fahrzeugbasiertes Kommunikationsverfahren, das auf ein fahrzeugbasiertes Kommunikationssystem angewendet wird, wobei das Kommunikationssystem eine erste Rechenvorrichtung umfasst, die als erste Kommunikationsvorrichtung (140), die einem ersten Fahrzeug (110) entspricht, wirkt, und eine zweite Rechenvorrichtung, die als ein Server (130) wirkt, der mit der ersten Kommunikationsvorrichtung verbunden ist, und das Verfahren, umfassend:
Erhalten von Kennzeicheninformationen eines zweiten Fahrzeugs und einer Vorrichtungskennung des ersten Kommunikationsvorrichtung (201, 401) durch die erste Kommunikationsvorrichtung;
Senden der Kennzeicheninformationen des zweiten Fahrzeugs und der Vorrichtungskennung der ersten Kommunikationsvorrichtung durch die erste Kommunikationsvorrichtung an den Server (202);
Empfangen der Kennzeicheninformationen des zweiten Fahrzeugs und der Vorrichtungskennung der ersten Kommunikationsvorrichtung (203, 403) durch den Server;
Bestimmen durch den Server eines Kommunikationskontos einer zweiten Kommunikationsvorrichtung, die dem zweiten Fahrzeug entspricht, nach den Kennzeicheninformationen des zweiten Fahrzeugs und Senden des Kommunikationskontos der zweiten Kommunikationsvorrichtung an die erste Kommunikationsvorrichtung (204); und
Empfangen des Kommunikationskontos der zweiten
Kommunikationsvorrichtung durch die erste Kommunikationsvorrichtung und
das Kommunizieren mit der zweiten Kommunikationsvorrichtung nach dem Kommunikationskonto der zweiten Kommunikationsvorrichtung (205);
wobei der Server ein Server des sozialen Netzwerks ist, die erste Kommunikationsvorrichtung einen ersten Ereignisdatenschreiber und einen ersten Client des sozialen Netzwerks umfasst, die zweite
Kommunikationsvorrichtung ein zweiter Client des sozialen Netzwerks ist, ein Kommunikationskonto der ersten Kommunikationsvorrichtung ein erstes Konto im sozialen Netzwerk, und das Kommunikationskonto der zweiten Kommunikationsvorrichtung ein zweites Konto im sozialen Netzwerk ist;
wobei das Erhalten von Kennzeicheninformationen eines zweiten Fahrzeugs und einer Vorrichtungskennung der ersten Kommunikationsvorrichtung durch die erste Kommunikationsvorrichtung umfasst:
nachdem eine Tastenkombination von einem Fahrzeughalter des ersten Fahrzeugs ausgelöst wurde, wenn der Fahrzeughalter des ersten Fahrzeugs mit einem Fahrzeughalter des zweiten Fahrzeugs kommunizieren muss,
Erhalten der Kennzeicheninformationen des zweiten Fahrzeugs und einer Vorrichtungskennung des ersten Ereignisdatenschreibers durch den ersten Ereignisdatenschreiber;
wenn die Kennzeicheninformationen des zweiten Fahrzeugs ein Kennzeichenbild des zweiten Fahrzeugs ist, Fotografieren eines Kennzeichens des zweiten Fahrzeugs durch den ersten Ereignisdatenschreiber und Erhalten des Kennzeichenbildes des zweiten Fahrzeugs; und
wenn die Kennzeicheninformationen des zweiten Fahrzeugs eine Kennzeichennummer des zweiten Fahrzeugs ist, Fotografieren eines Kennzeichens des zweiten Fahrzeugs durch den ersten Ereignisdatenschreiber, Erhalten eines Kennzeichenbildes und Parsen des Kennzeichenbildes, um die Kennzeichennummer des zweiten Fahrzeugs zu erhalten;
wobei das Senden der Kennzeicheninformationen des zweiten Fahrzeugs und der Vorrichtungskennung der ersten Kommunikationsvorrichtung durch die erste Kommunikationsvorrichtung an den Server umfasst:
Senden der Kennzeicheninformationen des zweiten Fahrzeugs und der Vorrichtungskennung des ersten Ereignisdatenschreibers durch den ersten Ereignisdatenschreiber an den Server des sozialen Netzwerks (402);
wobei das Bestimmen und Senden des Kommunikationskontos der zweiten Kommunikationsvorrichtung an die erste Kommunikationsvorrichtung durch den Server umfasst:
Bestimmen (405) durch den Server des sozialen Netzwerks des ersten Konto im sozialen Netzwerk, das der Vorrichtungskennung des ersten Ereignisdatenschreibers entspricht, nach einer voreingestellten Zuordnungsbeziehung, wobei die voreingestellte Zuordnungsbeziehung zum Aufzeichnen einer Entsprechung zwischen einer Kennzeichennummer, einem Konto im sozialen Netzwerk und einer Vorrichtungskennung eines Ereignisdatenschreibers verwendet wird; und
Senden (406) durch den Server des sozialen Netzwerks des zweiten Kontos des sozialen Netzwerks an den ersten Client des sozialen Netzwerks, bei dem das erste Konto im sozialen Netzwerk angemeldet ist;
wobei das Empfangen des Kommunikationskontos der zweiten Kommunikationsvorrichtung durch die erste Kommunikationsvorrichtung und das Kommunizieren mit der zweiten Kommunikationsvorrichtung nach dem Kommunikationskonto der zweiten Kommunikationsvorrichtung umfasst:
Empfangen (407) durch den ersten Client des sozialen Netzwerks des zweiten Konto im sozialen Netzwerk und direktes Herstellen einer Kommunikation nach dem zweiten Konto im sozialen Netzwerk mit dem zweiten Client des sozialen Netzwerks, bei dem das zweite Konto im sozialen Netzwerk angemeldet ist.

2. Verfahren nach Anspruch 1, wobei das Bestimmen eines Kommunikationskontos einer zweiten Kommunikationsvorrichtung, die dem zweiten Fahrzeug entspricht, nach den Kennzeicheninformationen des zweiten Fahrzeugs durch den Server umfasst:
Ausparsen (404a) durch den Server des sozialen Netzwerks, wenn die Kennzeicheninformationen des zweiten Fahrzeugs ein Kennzeichenbild des zweiten Fahrzeugs sind, die vom ersten Ereignisdatenschreiber erfasst werden, einer Kennzeichennummer des zweiten Fahrzeugs aus dem Kennzeichenbild und Bestimmen des zweiten Kontos im sozialen Netzwerk, das der Kennzeichennummer des zweiten Fahrzeugs entspricht, nach der voreingestellten Zuordnungsbeziehung; oder Bestimmen (404b) durch den Server des sozialen Netzwerks, wenn die Kennzeicheninformationen des zweiten Fahrzeugs eine Kennzeichennummer sind, die vom ersten Ereignisdatenschreiber aus einem erfassten Kennzeichenbild des zweiten Fahrzeugs ausgeparst wird, des zweiten Kontos im sozialen Netzwerk, das der Kennzeichennummer des zweiten Fahrzeugs entspricht, nach der voreingestellten Zuordnungsbeziehung.

3. Verfahren nach Anspruch 2, bevor Kennzeicheninformationen eines zweiten Fahrzeugs und eine Vorrichtungskennung der ersten Kommunikationsvorrichtung durch die erste Kommunikationsvorrichtung erhalten werden, ferner umfassend:
Erhalten (501) der Vorrichtungskennung des ersten Ereignisdatenschreibers und des ersten Kontos im sozialen Netzwerk, das auf dem ersten Client des sozialen Netzwerks angemeldet ist, durch die erste Kommunikationsvorrichtung;
Erhalten (502) von Kennzeicheninformationen des ersten Fahrzeugs durch die erste Kommunikationsvorrichtung;
Senden (503) der Vorrichtungskennung des ersten Ereignisdatenschreibers, der Kennzeicheninformationen des ersten Fahrzeugs und des ersten Kontos eines sozialen Netzwerks durch die erste Kommunikationsvorrichtung an den Server;
Empfangen (504) der Vorrichtungskennung des ersten Ereignisdatenschreibers, der Kennzeicheninformationen des ersten Fahrzeugs und des ersten Kontos im sozialen Netzwerk durch den Server; und
Ausparsen (505a) durch den Server, wenn die Kennzeicheninformationen ein Kennzeichenbild des ersten Fahrzeugs sind, einer Kennzeichennummer des ersten Fahrzeugs aus dem Kennzeichenbild und Herstellen der voreingestellten Zuordnungsbeziehung zwischen der Vorrichtungskennung des ersten Ereignisdatenschreibers, der Kennzeichennummer des ersten Fahrzeugs und des ersten Kontos im sozialen Netzwerk; oder Herstellen (505b) durch den Server, wenn die Kennzeicheninformationen eine Kennzeichennummer des ersten Fahrzeugs sind, der voreingestellten Zuordnungsbeziehung zwischen der Vorrichtungskennung des ersten Ereignisdatenschreibers, der Kennzeichennummer des ersten Fahrzeugs und des ersten Kontos im sozialen Netzwerk,
wobei die erste Kommunikationsvorrichtung der erste Ereignisdatenschreiber oder der erste soziale Client ist, bei dem das erste soziale Konto angemeldet ist.

4. Verfahren nach Anspruch 2 vor dem Bestimmen eines Kommunikationskontos einer zweiten Kommunikationsvorrichtung, die dem zweiten Fahrzeug entspricht, nach den Kennzeicheninformationen des zweiten Fahrzeugs durch den Server, ferner umfassend:
Erhalten (601) der Vorrichtungskennung des zweiten Ereignisdatenschreibers und des zweiten Kontos im sozialen Netzwerk, das auf dem zweiten Client des sozialen Netzwerks angemeldet ist, durch die zweite Kommunikationsvorrichtung;
Erhalten (602) von Kennzeicheninformationen des zweiten Fahrzeugs durch die zweite Kommunikationsvorrichtung;
Senden (603) der Vorrichtungskennung des zweiten Ereignisdatenschreibers, der Kennzeicheninformationen des zweiten Fahrzeugs und des zweiten Kontos eines sozialen Netzwerks durch die zweite Kommunikationsvorrichtung an den Server;
Empfangen (604) der Vorrichtungskennung des zweiten Ereignisdatenschreibers, der Kennzeicheninformationen des zweiten Fahrzeugs und des zweiten Kontos im sozialen Netzwerk durch den Server; und
Parsen (606a) durch den Server, wenn die Kennzeicheninformationen ein Kennzeichenbild des zweiten Fahrzeugs sind, einer Kennzeichennummer des zweiten Fahrzeugs aus dem Kennzeichenbild des zweiten Fahrzeugs und
Herstellen der voreingestellten Zuordnungsbeziehung zwischen der Vorrichtungskennung des zweiten Ereignisdatenschreibers, der Kennzeichennummer des zweiten Fahrzeugs und des zweiten Kontos im sozialen Netzwerk; oder Herstellen (606b) durch den Server, wenn die Kennzeicheninformationen eine Kennzeichennummer des zweiten Fahrzeugs sind, der voreingestellten Zuordnungsbeziehung zwischen der Vorrichtungskennung des zweiten Ereignisdatenschreibers, der Kennzeichennummer des zweiten Fahrzeugs und des zweiten Kontos im sozialen Netzwerk,
wobei die zweite Kommunikationsvorrichtung der zweite Ereignisdatenschreiber oder der zweite Client des sozialen Netzwerks ist, bei dem das zweite Konto im sozialen Netzwerk angemeldet ist.

5. Fahrzeugbasiertes Kommunikationssystem, wobei das Kommunikationssystem umfasst: eine erste Kommunikationsvorrichtung (140), die einem ersten Fahrzeug (110) entspricht, und einen Server (130), der mit der ersten Kommunikationsvorrichtung verbunden ist, und das System umfasst:
die erste Kommunikationsvorrichtung, die dazu ausgelegt ist:
Kennzeicheninformationen eines zweiten Fahrzeugs und eine Vorrichtungskennung der ersten Kommunikationsvorrichtung zu erhalten und die Kennzeicheninformationen des zweiten Fahrzeugs und die Vorrichtungskennung der ersten Kommunikationsvorrichtung an den Server zu senden; und
der Server, dazu ausgelegt ist: die Kennzeicheninformationen des zweiten Fahrzeugs und die Vorrichtungskennung der ersten Kommunikationsvorrichtung zu empfangen; und ein Kommunikationskonto einer zweiten Kommunikationsvorrichtung, die dem zweiten Fahrzeug entspricht, nach den Kennzeicheninformationen des zweiten Fahrzeugs zu bestimmen und das Kommunikationskonto der zweiten Kommunikationsvorrichtung an die erste Kommunikationsvorrichtung zu senden;
die erste Kommunikationsvorrichtung dazu ausgelegt ist: das Kommunikationskonto der zweiten Kommunikationsvorrichtung zu empfangen und mit der zweiten Kommunikationsvorrichtung nach dem Kommunikationskonto zu kommunizieren;
wobei der Server ein Server des sozialen Netzwerks ist, die erste Kommunikationsvorrichtung einen ersten Ereignisdatenschreiber und einen ersten Client des sozialen Netzwerks umfasst, die zweite Kommunikationsvorrichtung ein zweiter Client des sozialen Netzwerks ist, ein Kommunikationskonto der ersten Kommunikationsvorrichtung ein erstes Konto im sozialen Netzwerk, und das Kommunikationskonto der zweiten Kommunikationsvorrichtung ein zweites Konto im sozialen Netzwerk ist;
die erste Kommunikationsvorrichtung dazu ausgelegt ist, die Kennzeicheninformationen des zweiten Fahrzeugs und eine Vorrichtungskennung des ersten Ereignisdatenschreibers zu erhalten und die Kennzeicheninformationen des zweiten Fahrzeugs und die Vorrichtungskennung des ersten Ereignisdatenschreibers an den Server des sozialen Netzwerks zu senden;
wobei der erste Ereignisdatenschreiber dazu ausgelegt ist, nachdem eine Tastenkombination durch einen Fahrzeughalter des ersten Fahrzeugs ausgelöst wurde, wenn der Fahrzeughalter des ersten Fahrzeugs mit einem Fahrzeughalter des zweiten Fahrzeugs kommunizieren muss, die Kennzeicheninformationen des zweiten Fahrzeugs und die Vorrichtungskennung des ersten Ereignisdatenschreibers zu erhalten;
wobei der erste Ereignisdatenschreiber dazu ausgelegt ist, wenn die Kennzeicheninformationen des zweiten Fahrzeugs ein Kennzeichenbild des zweiten Fahrzeugs sind, ein Kennzeichen des zweiten Fahrzeugs zu fotografieren und das Kennzeichenbild des zweiten Fahrzeugs zu erhalten;
und wenn die Kennzeicheninformationen des zweiten Fahrzeugs eine Kennzeichennummer des zweiten Fahrzeugs sind, ein Kennzeichen des zweiten Fahrzeugs zu fotografieren, ein Kennzeichenbild zu erhalten und das Kennzeichenbild zu parsen, um die Kennzeichennummer des zweiten Fahrzeugs zu erhalten;
der Server des sozialen Netzwerks dazu ausgelegt ist, das erste Konto im sozialen Netzwerk zu bestimmen, das der Vorrichtungskennung des ersten Ereignisdatenschreibers nach einer voreingestellten Zuordnungsbeziehung entspricht, wobei die voreingestellte Zuordnungsbeziehung zum Aufzeichnen einer Entsprechung zwischen einer Kennzeichennummer, einem Konto im sozialen Netzwerk und einer Vorrichtungskennung eines Ereignisdatenschreibers verwendet wird; und das zweite Konto im sozialen Netzwerk an den ersten Client des sozialen Netzwerks zu senden, bei dem das erste Konto im sozialen Netzwerk angemeldet ist;
der erste Client des sozialen Netzwerks dazu ausgelegt ist, das zweite Konto im sozialen Netzwerk zu empfangen und direkt eine Kommunikation nach dem zweiten Konto im sozialen Netzwerk mit dem zweiten Client des sozialen Netzwerks herzustellen, bei dem das zweite Konto im sozialen Netzwerk angemeldet ist.

## Revendications

1. Procédé de communication basé sur véhicule, appliqué à un système de communication basé sur véhicule, le système de communication comprenant un premier dispositif informatique agissant comme un premier dispositif de communication (140) correspondant à un premier véhicule (110), et un second dispositif informatique agissant comme un serveur (130) connecté au premier dispositif de communication, et le procédé comprenant :
d'obtenir, par le premier dispositif de communication, une information de plaque d'immatriculation d'un second véhicule et un identifiant de dispositif du premier dispositif de communication (201, 401) ;
d'envoyer, par le premier dispositif de communication, l'information de plaque d'immatriculation du second véhicule et l'identifiant de dispositif du premier dispositif de communication au serveur (202) ;
de recevoir, par le serveur, l'information de plaque d'immatriculation du second véhicule et l'identifiant de dispositif du premier dispositif de communication (203, 403) ;
de déterminer, par le serveur, un compte de communication d'un second dispositif de communication correspondant au second véhicule d'après l'information de plaque d'immatriculation du second véhicule, et d'envoyer le compte de communication du second dispositif de communication au premier dispositif de communication (204) ; et
de recevoir, par le premier dispositif de communication, le compte de communication du second dispositif de communication, et de communiquer avec le second dispositif de communication d'après le compte de communication du second dispositif de communication (205) ;
dans lequel le serveur est un serveur de réseau social, le premier dispositif de communication comprend un premier enregistreur de données d'événement et un premier client de réseau social, le second dispositif de communication est un second client de réseau social, un compte de communication du premier dispositif de communication est un premier compte de réseau social, et le compte de communication du second dispositif de communication est un second compte de réseau social ;
dans lequel l'obtention, par le premier dispositif de communication, d'une information de plaque d'immatriculation d'un second véhicule et d'un identifiant de dispositif du premier dispositif de communication comprend :
après qu'une touche de raccourci est actionnée par un propriétaire de véhicule du premier véhicule quand le propriétaire de véhicule du premier véhicule a besoin de communiquer avec un propriétaire de véhicule du second véhicule,
d'obtenir, par le premier enregistreur de données d'événement, l'information de plaque d'immatriculation du second véhicule et un identifiant de dispositif du premier enregistreur de données d'évènement ;
quand l'information de plaque d'immatriculation du second véhicule est une image de plaque d'immatriculation du second véhicule, de prendre une photographie d'une plaque d'immatriculation du second véhicule, par le premier enregistreur de données d'événement, et d'obtenir l'image de plaque d'immatriculation du second véhicule ; et
quand l'information de plaque d'immatriculation du second véhicule est un numéro de plaque d'immatriculation du second véhicule, de prendre une photographie d'une plaque d'immatriculation du second véhicule, par le premier enregistreur de données d'événement, d'obtenir une image de plaque d'immatriculation et d'analyser l'image de plaque d'immatriculation pour obtenir le numéro de plaque d'immatriculation du second véhicule ;
dans lequel l'envoi, par le premier dispositif de communication, de l'information de plaque d'immatriculation du second véhicule et de l'identifiant de dispositif du premier dispositif de communication au serveur comprend :
d'envoyer, par le premier enregistreur de données d'événement, l'information de plaque d'immatriculation du second véhicule et l'identifiant de dispositif du premier enregistreur de données d'événement au serveur de réseau social (402) ;
dans lequel la détermination et l'envoi, par le serveur, du compte de communication du second dispositif de communication au premier dispositif de communication comprend :
de déterminer (405), par le serveur de réseau social, le premier compte de réseau social correspondant à l'identifiant de dispositif du premier enregistreur de données d'événement d'après une relation de mappage préétablie, la relation de mappage préétablie étant utilisée pour enregistrer une correspondance entre un numéro de plaque d'immatriculation, un compte de réseau social, et un identifiant de dispositif d'un enregistreur de données d'évènement ; et
d'envoyer (406), par le serveur de réseau social, le second compte de réseau social au premier client de réseau social sur lequel le premier compte de réseau social est connecté ;
dans lequel la réception, par le premier dispositif de communication, du compte de communication du second dispositif de communication, et la communication avec le second dispositif de communication selon le compte de communication du second dispositif de communication comprend :
de recevoir (407), par le premier client de réseau social, le second compte de réseau social, et d'établir directement une communication, selon le second compte de réseau social, avec le second client de réseau social sur lequel le compte de réseau social est connecté.

2. Procédé selon la revendication 1, dans lequel la détermination, par le serveur, d'un compte de communication d'un second dispositif de communication correspondant au second véhicule selon l'information de plaque d'immatriculation du second véhicule comprend :
d'analyser, dans (404a), par le serveur de réseau social quand l'information de plaque d'immatriculation du second véhicule est une image de plaque d'immatriculation du second véhicule qui est capturée par le premier enregistreur de données d'événement, un numéro de plaque d'immatriculation du second véhicule à partir de l'image de plaque d'immatriculation, et de déterminer le second compte de réseau social correspondant au numéro de plaque d'immatriculation du second véhicule selon la relation de mappage préétablie ; ou de déterminer (404b), par le serveur de réseau social quand l'information de plaque d'immatriculation du second véhicule est un numéro de plaque d'immatriculation analysé par le premier enregistreur de données d'événement à partir d'une image de plaque d'immatriculation capturée du second véhicule, le second compte de réseau social correspondant au numéro de plaque d'immatriculation du second véhicule selon la relation de mappage préétablie.

3. Procédé selon la revendication 2, avant l'obtention, par le premier dispositif de communication, d'une information de plaque d'immatriculation d'un second véhicule et d'un identifiant de dispositif du premier dispositif de communication, comprenant en outre :
d'obtenir (501), par le premier dispositif de communication, l'identifiant de dispositif du premier enregistreur de données d'événement et le premier compte de réseau social connecté sur le premier client de réseau social ;
d'obtenir (502), par le premier dispositif de communication, une information de plaque d'immatriculation du premier véhicule ;
d'envoyer (503), par le premier dispositif de communication, l'identifiant de dispositif du premier enregistreur de données d'événement, l'information de plaque d'immatriculation du premier véhicule, et le premier compte de réseau social au serveur ;
de recevoir (504) par le serveur, l'identifiant de dispositif du premier enregistreur de données d'événement, l'information de plaque d'immatriculation du premier véhicule, et le premier compte de réseau social ; et
d'analyser, dans (505a), par le serveur quand l'information de plaque d'immatriculation est une image de plaque d'immatriculation du premier véhicule, un numéro de plaque d'immatriculation du premier véhicule à partir de l'image de plaque d'immatriculation, et d'établir la relation de mappage préétablie entre l'identifiant de dispositif du premier enregistreur de données d'événement, le numéro de plaque d'immatriculation du premier véhicule, et le premier compte de réseau social ; ou d'établir (505b), par le serveur quand l'information de plaque d'immatriculation est un numéro de plaque d'immatriculation du premier véhicule, la relation de mappage préétablie entre l'identifiant de dispositif du premier enregistreur de données d'événement, le numéro de plaque d'immatriculation du premier véhicule, et le premier compte de réseau social,
le premier dispositif de communication étant le premier enregistreur de données d'événement, ou le premier client social sur lequel le premier compte social est connecté.

4. Procédé selon la revendication 2, avant la détermination, par le serveur, d'un compte de communication d'un second dispositif de communication correspondant au second véhicule selon l'information de plaque d'immatriculation du second véhicule, comprenant en outre ;
d'obtenir (601), par le second dispositif de communication, l'identifiant de dispositif du second enregistreur de données d'événement et le second compte de réseau social connecté sur le second client de réseau social ;
d'obtenir (602), par le second dispositif de communication, une information de plaque d'immatriculation du second véhicule ;
d'envoyer (603), par le second dispositif de communication, l'identifiant de dispositif du second enregistreur de données d'événement, l'information de plaque d'immatriculation du second véhicule, et le second compte de réseau social au serveur ;
de recevoir (604), par le serveur, l'identifiant de dispositif du second enregistreur de données d'événement, l'information de plaque d'immatriculation du second véhicule, et le second compte de réseau social ; et
d'analyser (606a), par le serveur quand l'information de plaque d'immatriculation est l'image de plaque d'immatriculation du second véhicule, le numéro de plaque d'immatriculation du second véhicule à partir de l'image de plaque d'immatriculation du second véhicule, et d'établir la relation de mappage préétablie entre l'identifiant de dispositif du second enregistreur de données d'événement, le numéro de plaque d'immatriculation du second véhicule, et le second compte de réseau social ; ou d'établir (606b), par le serveur quand l'information de plaque d'immatriculation est le numéro de plaque d'immatriculation du second véhicule, la relation de mappage préétablie entre l'identifiant de dispositif du second enregistreur de données d'événement, le numéro de plaque d'immatriculation du second véhicule, et le second compte de réseau social,
le second dispositif de communication étant le second enregistreur de données d'événement, ou le second client de réseau social sur lequel le second compte de réseau social est connecté.

5. Système de communication basé sur véhicule, le système de communication comprenant un premier dispositif de communication (140) correspondant à un premier véhicule (110), un serveur (130) connecté au premier dispositif de communication, et le système comprenant :
le premier dispositif de communication, configuré pour obtenir une information de plaque d'immatriculation d'un second véhicule et un identifiant de dispositif du premier dispositif de communication, et envoyer l'information de plaque d'immatriculation du second véhicule et l'identifiant de dispositif du premier dispositif de communication au serveur ; et
le serveur, configuré pour recevoir l'information de plaque d'immatriculation du second véhicule et l'identifiant de dispositif du premier dispositif de communication ; et déterminer un compte de communication d'un second dispositif de communication correspondant au second véhicule d'après l'information de plaque d'immatriculation du second véhicule, et envoyer le compte de communication du second dispositif de communication au premier dispositif de communication,
le premier dispositif de communication étant configuré pour recevoir le compte de communication du second dispositif de communication, et communiquer avec le second dispositif de communication d'après le compte de communication ;
dans lequel le serveur est un serveur de réseau social, le premier dispositif de communication comprend un premier enregistreur de données d'événement et un premier client de réseau social, le second dispositif de communication est un second client de réseau social, un compte de communication du premier dispositif de communication est un premier compte de réseau social, et le compte de communication du second dispositif de communication est un second compte de réseau social ;
le premier dispositif de communication est configuré pour obtenir l'information de plaque d'immatriculation du second véhicule et un identifiant de dispositif du premier enregistreur de données d'événement, et envoyer l'information de plaque d'immatriculation du second véhicule et l'identifiant de dispositif du premier enregistreur de données d'événement au serveur de réseau social ;
dans lequel le premier enregistreur de données d'événement est configuré pour, après qu'une touche de raccourci est actionnée par un propriétaire de véhicule du premier véhicule quand le propriétaire de véhicule du premier véhicule a besoin de communiquer avec un propriétaire de véhicule du second véhicule, obtenir l'information de plaque d'immatriculation du second véhicule et l'identifiant de dispositif du premier enregistreur de données d'événement,
dans lequel le premier enregistreur de données d'événement est configuré pour, quand l'information de plaque d'immatriculation du second véhicule est une image de plaque d'immatriculation du second véhicule, prendre une photographie d'une plaque d'immatriculation du second véhicule, et obtenir l'image de plaque d'immatriculation du second véhicule, et quand l'information de plaque d'immatriculation du second véhicule est un numéro de plaque d'immatriculation du second véhicule, prendre une photographie d'une plaque d'immatriculation du second véhicule, obtenir une image de plaque d'immatriculation et analyser l'image de plaque d'immatriculation pour obtenir le numéro de plaque d'immatriculation du second véhicule ;
le serveur de réseau social est configuré pour déterminer le premier compte de réseau social correspondant à l'identifiant de dispositif du premier enregistreur de données d'événement d'après une relation de mappage préétablie, la relation de mappage préétablie étant utilisée pour enregistrer une correspondance entre un numéro de plaque d'immatriculation, un compte de réseau social, et un identifiant de dispositif d'un enregistreur de données d'évènement ; et envoyer le second compte de réseau social au premier client de réseau social sur lequel le premier compte de réseau social est connecté ;
le premier client de réseau social est configuré pour recevoir le second compte de réseau social, et établir directement une communication, selon le second compte de réseau social, avec le second client de réseau social sur lequel le second compte de réseau social est connecté.
